# EUROPEAN PATENT SPECIFICATION

(11) **EP 1 334 856 B1**
(45) Date of publication and mention of the grant of the patent: **02.12.2009**
(21) Application number: 03002297.4
(22) Date of filing: 03.02.2003
(51) Int. Cl.: B60J 5/04, E05D 3/10

(54) **A mechanism for opening a gull-wing side door of a motor vehicle**
Vorrichtung zur Öffnung einer Flügeltür eines Kraftfahrzeugs
Mécanisme d'ouverture d'une porte à aile d'un véhicule

(30) Priority: 08.02.2002 IT TO20020116
(43) Date of publication of application: 13.08.2003
(73) Proprietor: ITALDESIGN-GIUGIARO S.p.A, 10121 Torino (IT)
(72) Inventor: De La Fuente, Manuel, 14024 Moncucco Torinese (Asti) (IT)
(74) Representative: Rondano, Davide

(56) References cited:
- DE-A1- 4 319 662
- DE-A1- 10 025 925
- DE-A1- 19 738 825
- FR-A- 2 736 380

## Description

The present invention refers to a mechanism for opening and closing a gull-wing side door of a motor vehicle.

It is known for motor vehicles, particularly sport cars, the use of so-called gull-wing side doors, that is, side doors which can be opened upwards by rotation about a substantially horizontal axis.

A door of the type defined above is disclosed in German publication DE 197 38 825, from which Figures 6 and 7 of the appended drawings are taken. With reference to these Figures, a motor-vehicle side door 1 is hinged to the vehicle structure for rotation about a horizontal axis 2 arranged nearly in front of the door pillar 3 and inclined rearwards about 15 degrees (angle a) to the transverse direction, that is, to a direction perpendicular to the driving direction (in accordance with the convention usually adopted in the automotive industry). The use of a hinge axis close to a front lower portion of the door is particularly advantageous from an ergonomic point of view, since it enables to reduce the space taken by the door in the open position and enlarge accordingly the space available for entering in or exiting from the passenger compartment. As can be clearly understood, in order to prevent the front part of the door frame from interfering with the motor-vehicle structure during the opening movement, the hinge axis 2 of the door is inclined to the transverse direction whereby the door shifts laterally outwards while being opened.

However, the arrangement provided in the above publication requires a special shape of the door frame in the region where the door is hinged and thereby an accordingly larger lateral size of the vehicle, to the detriment of the aesthetic aspect thereof.

Also the French publication FR 2 736 380, which shows the preamble of claim 1, shows a hinge for a gull-wing side door.

It is the object of the present invention to provide an improved mechanism for opening and closing a gull-wing door of a motor vehicle with respect to the prior art discussed above, which is not affected by the problems discussed above and enables the driver or the passenger to easily enter in or exit from the vehicle.

This object is fully achieved according to present invention by a mechanism as defined in independent Claim 1.

In short, the invention is based on the idea of providing a mechanism for opening and closing a gull-wing side door of a motor vehicle which is arranged to move the door simultaneously upwards, by rotation about a substantially horizontal and transverse axis, and outwards, as a result of a translation in a substantially lateral direction. The mechanism is mounted on a side member of the motor-vehicle structure in the vicinity of the front door pillar and acts on a front lower portion of the door frame, thus reducing the space taken by the door in the open position, as explained before in connection with the prior art.

Further characteristics of the invention will result from the following detailed description of a preferred embodiment thereof, given purely by way of non-limitative example, with reference to the appended drawings, in which:
Figure 1 is a side perspective view from the inside of the vehicle of a mechanism for opening and closing a gull-wing left-hand side door according to the present invention, in a closed-door position;
Figure 2 is a rear perspective view of the mechanism of Figure 1;
Figure 3 is a perspective view from above of the mechanism of Figure 1;
Figure 4 is a side view from the outside of the vehicle of a gull-wing door provided with a mechanism according to the present invention, showing a series of intermediate positions throughout the opening/closing movement of the door;
Figure 5 is a similar view to that of Figure 4, from the inside of the vehicle;
Figure 6 is a side view of a gull-wing door according to the prior art; and
Figure 7 is a plan enlarged view, sectioned along line VII-VII, showing a detail of the gull-wing door of Figure 6,.

In the description and claims which follow, terms such as "front" or "rear", "upper" or "lower", "longitudinal" or "transverse" are to be understood as referred to the mounted condition on the motor vehicle.

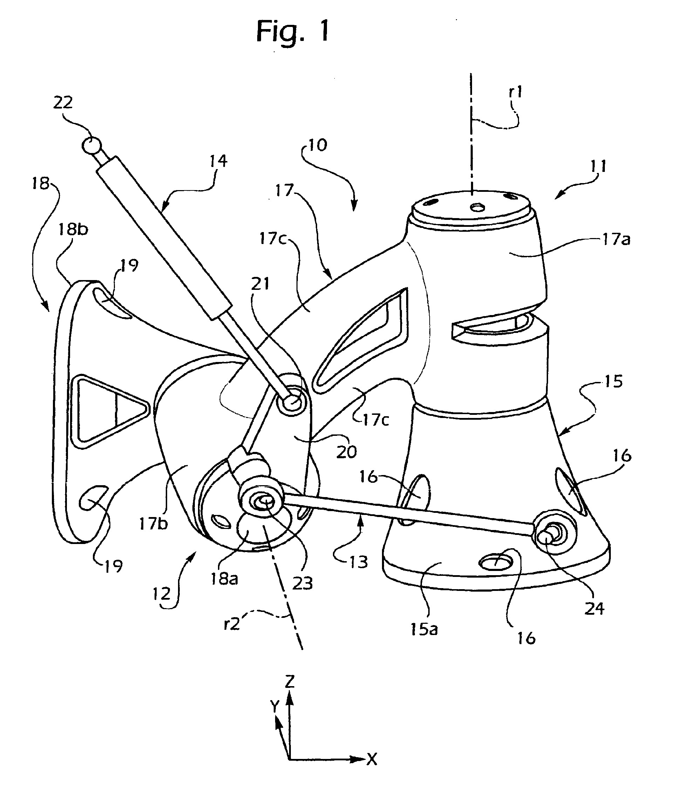

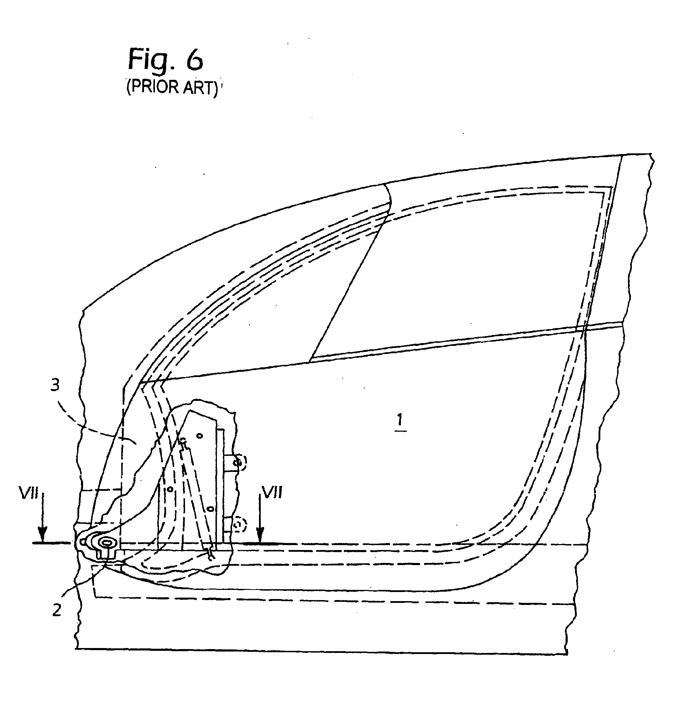

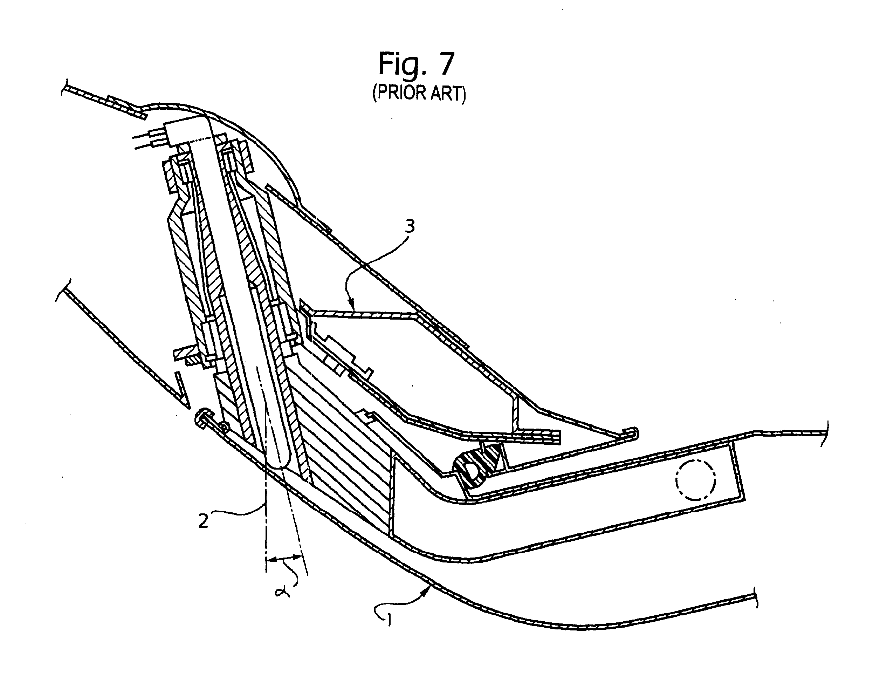

With reference to Figures 1 to 5, in which parts and elements identical or corresponding to those of Figures 6 and 7 (prior art) have been given the same numbers, a mechanism according to the invention, generally indicated 10, is associated to a motor-vehicle side door 1 for moving the door 1 between a closed position C and an open position A.

The mechanism 10 is mounted on a side member of the motor-vehicle structure (not shown) close to the front pillar of the respective door 1 and comprises basically a pair of hinges 11, 12, the axes of which neither lie in the same plane nor intersect each other, a rod 13 for connection between the two hinges 11, 12 and a gas spring 14.

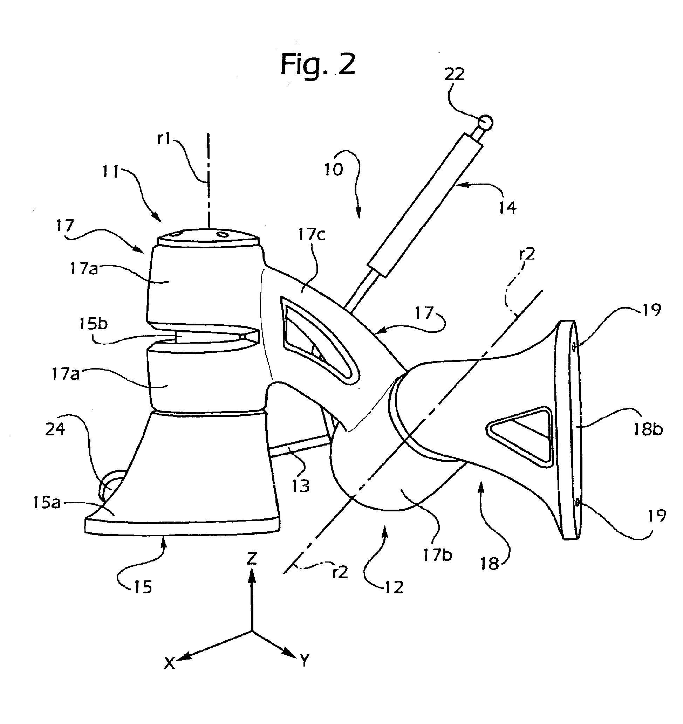

By referring now to Figures 1 to 3 in particular, the first hinge 11 comprises:
a stationary mounting body 15 having at its bottom a base portion 15a to be attached to the side member of the vehicle, for example, by means of a plurality of screws (not shown) inserted in a corresponding plurality of through-holes 16 provided in the base portion 15a, and a vertical cylindrical pin 15b (Figure 2) at the top of the base portion 15a, the axis of which is indicated r1 and defines the axis of rotation for the hinge 11; and
a movable arm, generally indicated 17, having a first hollow cylindrical portion 17a mounted coaxial on the pin 15b of the stationary body 15 for rotation about the axis r1.

The arm 17 has also a second hollow cylindrical portion 17b the axis of which is indicated r2 and defines the axis of rotation for the second hinge 12. The second axis r2, which neither lies in the same plane as the first axis r1 nor intersects this latter, can rotate about the first axis r1 upon rotation of the movable arm 17.

As can be seen in particular in Figures 1 and 2, where a tern of three perpendicular axes is shown, of which a first axis x is orientated longitudinally towards the front of the vehicle, a second axis y is orientated transversely towards the outside of the vehicle and a third axis z is orientated vertically upwards, when the door 1 is closed (position C) the axis of rotation r2 of the second hinge 12 is inclined upwards to a horizontal plane and rearwards to a transverse vertical plane.

The second arm portion 17b is rigidly connected to the first portion 17a through an arcuate connecting portion 17c which runs nearly longitudinally.

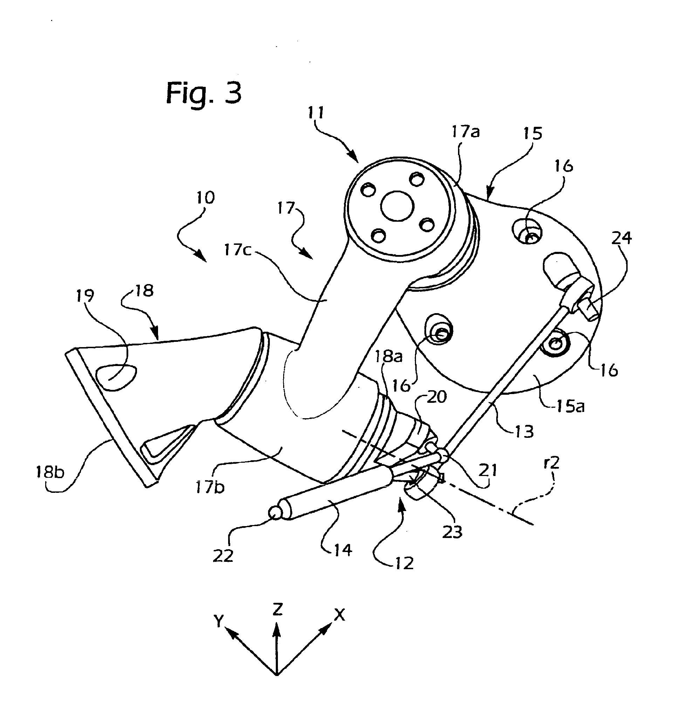

The second hinge 12 comprises:
the above-mentioned second hollow cylindrical portion 17b of the movable arm 17 defining the axis of rotation r2 for the second hinge; and
a movable body 18 comprising a cylindrical pin-like portion 18a (Figures 1 and 3) inserted into the hollow cylindrical portion 17b for rotation about the axis r2 and a bracket-like attachment portion 18b having, for example, a plurality of holes 19 into which a corresponding plurality of screws (not shown) can be inserted for fixing that portion to the frame of the door 1.

An end of the pin-like portion 18a of the second hinge 12 projecting from the hollow cylindrical portion 17b at the opposite side from the bracket-like portion 18b has a radially projecting extension 20 which provides a first point of articulation 21, spaced apart from the axis of rotation r2 of the portion 18a, for articulation of the gas spring 14. A second point of articulation 22 for the gas spring 14, on the other hand, is provided on a stationary portion of the vehicle (not shown), for example, on the front door pillar.

Finally, the stationary body 15 of the first hinge 11 and the movable body 18 of the second hinge 12 are connected with each other by the connecting rod 13, the ends of which are engaged by a first articulation pin 23 projecting from the extension 20 and spaced from the axis r2, and by a second articulation pin 24 projecting from the base portion 15a. The two pins 23 and 24 are arranged in such a manner that, with the door 1 in the closed position C, the rod 13 converges in plan view to the connecting portion 17c of the first hinge 11 towards the rear of the vehicle, as can be seen in Figure 3.

The operation of the mechanism 10 will be illustrated now by describing in detail only the opening movement of the side door 1 (that is, the movement from the closed position C to the open position A), the opposite movement being apparent in the light of the following description.

As explained before, the double-hinge mechanism 10 allows rotation about both the first axis r1, whereby the door is moved laterally outwards, and the second axis r2, whereby the door is shifted vertically upwards. While the axis r1 is held stationary with respect to the vehicle, the axis r2 is driven in rotation about the axis r1 as a single piece with the movable body 17. Due to its particular arrangement with respect to the parts constituting the two hinges 11, 12, the connecting rod 13 enables to combine the rotary movements about the two axes r1, r2 in such a manner that the mechanism 10 acts as an articulated quadrilateral mechanism in the three dimensions (not only in a plane). Therefore, the door only has to be either pulled laterally outwards or urged upwards to be opened, whereas it only has to be either pushed laterally inwards or urged downwards to be closed.

In case the door is pulled outwards, then the movable body 17 of the first hinge 11 is caused to rotate about the vertical axis r1. As a result, the rod 13 reacts as a pull-rod to rotation about the axis r1 and exerts through the pin 23 a clockwise torque (with respect to the view of Figure 1) about the axis r2 on the attachment portion 18 of the second hinge 12. As a result of the torque exerted by the rod 13, the attachment portion 18 of the second hinge 12 and the door 1 attached thereto are caused to rotate upwards about the axis r2. The pulling action of the rod 13 is amplified by the extension of the gas spring 14, thereby ensuring that the exerted torque is strong enough to raise the door.

In case the door is urged upwards, the attachment portion 18 of the second hinge 12 rotates together with the door about the axis r2. Then, the rod 13 reacts as a push-rod to rotation about the axis r2, thereby forcing the movable body 17 of the first hinge 11 to rotate about the axis r1 towards the outside of the vehicle. In this case, also, the upwardly movement of the door is assisted by the extension of the gas spring 14, whereby the opening operation does not require a fine effort from the user.

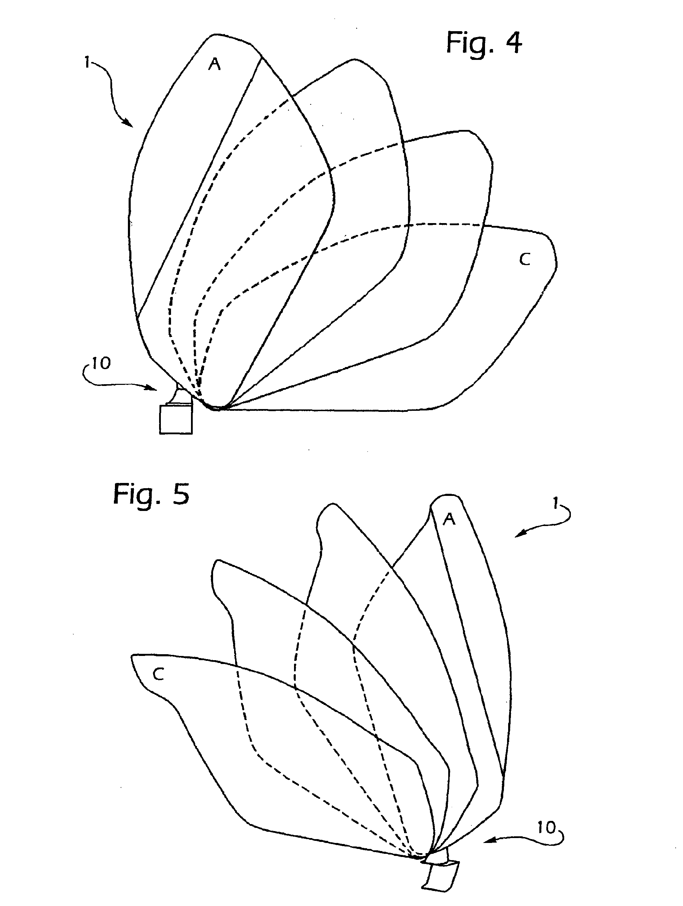

In the open position A (Figure 4) the door projects laterally outwards with respect to the closed position C and is inclined in a longitudinal vertical plane with its rear portion pointing upwards. Preferably, the mechanism 10 is provided with means for adjusting the travel of the rotary movements about the both axes r1 and r2, in order to set the amount of lateral projection and inclination of the door in the open position A. To this end, the extension 20 of the second hinge 12 can be coupled with the pin-like portion 18a by means, for example, of a toothed joint (not shown) which enables adjustment of the angular position of the extension 20 relative respect to the bracket-like attachment portion 18b. Therefore, if the extension 20 is rotated clockwise, for example, starting from the position illustrated in Figure 1, then the assembly constituted by the pin-like portion 18a and the attachment portion 18b is allowed to rotate a smaller angle than before, and the inclination of the door in the open position A will be accordingly smaller.

## Claims

1. A mechanism for opening and closing a gull-wing side door (1) of a motor vehicle, of the type comprising a first hinge (11) defining a first axis of rotation (r1) stationary with respect to the vehicle structure,
a second hinge (12) defining a second axis of rotation (r2) which neither lies in the same plane as the first axis (r1) nor intersects this latter, wherein the second axis (r2) is arranged to rotate about the first axis (r1) of the first hinge (11), **characterised in that** it comprises also a
connecting red (13) interposed between the two hinges (11, 12) for combining the rotary movements about their respective axes (r1, r2) so as to provide an articulated mechanism arranged to bring about the opening/closing movement of the door (1) by raising/lowering a rear part of the door (1) and, at the same time, by shifting laterally the door (1) towards the outside/inside of the vehicle.

2. A mechanism according to Claim 1, of the type in which the first hinge (11) comprises a stationary body (15) connected to the vehicle structure and a movable arm (17) mounted on the stationary body (15) for rotation about the first axis (r1), and the second hinge (12) comprises a movable body (18), to which the door (1) is attached and which is arranged to rotate relative to the movable arm (17) about the second axis of rotation (r2); **characterised in that** said connecting red (13) for combining the rotary movements of the two hinges (11, 12) about their respective axes (r1, r2) comprise a rod (13) having a first end articulated (24) to the stationary body (15) of the first hinge (11) and a second end articulated (23) to the movable body (18) of the second hinge (12) in a point spaced from the second axis of rotation (r2), whereby rotation of the movable body (18) relative to the movable arm (17) about the second axis (r2), in a direction such that the door (1) tends to rise/lower, causes the movable arm (17) to rotate relative to the stationary body (15) about the first axis (r1), thereby shifting laterally the door (1) towards the outside/inside of the vehicle.

3. A mechanism according to Claim 2, **characterised in that** the stationary body (15) of the first hinge (11) has a cylindrical portion (15b) coaxial with the first axis of rotation (r1), for engaging a corresponding first cylindrical portion (17a) of the movable arm (17) to enable rotation about the first axis (r1); and **in that** the movable arm (17) has a second cylindrical portion (17b) integral with the first portion (17a) and coaxial with the second axis of rotation (r2), for engaging a corresponding cylindrical portion (18a) of the movable body (18) to enable rotation about the second axis (r2).

4. A mechanism according to Claim 2 or 3, **characterised in that** it further comprises a gas spring (14) articulated at an end to the vehicle structure and at the opposite end to the movable body (18) of the second hinge (12) in a point spaced from the second axis of rotation (r2), whereby during the opening movement of the door (1) the gas spring (14) exerts a torque on the movable body (18) about the second axis of rotation (r2) which tends to raise the door (1).

5. A mechanism according to Claim 4, **characterised in that** the movable body (18) further comprises
an extension (20) for providing respective points of articulation for the rod (13) and the gas spring (14), the extension (20) being rotatable as a single piece with the cylindrical portion (18a) of the second hinge (12); and
means for varying the relative angular position between the extension (20) and the cylindrical portion (18a), thereby enabling to adjust the rotary movements of the two hinges (11, 12) about their respective axes of rotation (r1, r2).

6. A mechanism according to Claim 5, **characterised in that** the said means for varying the relative angular position between the extension (20) and the cylindrical portion (18a) of the second hinge (12) comprise a toothed joint.

7. Motor-vehicle side door (1), **characterised in that** it is provided with a mechanism (10) according to any of the preceding claims.

8. Motor vehicle having at least one side door (1), **characterised in that** it comprises a mechanism (10) according to any of Claims 1 to 6 for opening and closing the at least one side door (1).

## Patentansprüche

1. Mechanismus zum Öffnen und Schließen einer Flügeltür (1) eines Kraftfahrzeugs, vom Typ, der ein erstes Gelenk (11) umfasst, das eine erste Drehachse (r1) definiert, welche in Bezug auf den Fahrzeugrahmen feststehend ist,
sowie ein zweites Gelenk (12), das eine zweite Drehachse (r2) definiert, welche weder auf derselben Ebene wie die erste Achse (r1) liegt, noch letztere kreuzt, wobei die zweite Achse (r2) dazu angeordnet ist, sich um die erste Achse (r1) des ersten Gelenks (11) zu drehen,
**dadurch gekennzeichnet, dass** er auch eine Verbindungsstange (13) umfasst, die zwischen den beiden Gelenken (11, 12) eingeschoben ist, um die Drehwegungen um deren jeweilige Achsen (r1, r2) zu kombinieren, um einen Gelenkmechanismus bereitzustellen, der dazu angeordnet ist, die Öffnungs-/Schließbewegung der Tür (1) zu bewirken, indem ein hinterer Teil der Tür (1) angehoben/abgesenkt und gleichzeitig die Tür (1) seitlich zur Außenseite/Innenseite des Fahrzeugs verschoben wird.

2. Mechanismus gemäß Anspruch 1, vom Typ, bei dem das erste Gelenk (11) einen mit dem Fahrzeugrahmen verbundenen feststehenden Körper (15) und einen beweglichen Arm (17), der zur Drehung um die erste Achse (r1) am feststehenden Körper (15) montiert ist, umfasst und das zweite Gelenk (12) einen beweglichen Körper (18) umfasst, an dem die Tür (1) angebracht ist und der dazu angeordnet ist, sich relativ zum beweglichen Arm (17) um die zweite Drehachse (r2) herum zu drehen; **dadurch gekennzeichnet, dass** die Verbindungsstange (13) zum Kombinieren der Drehbewegungen der beiden Gelenke (11, 12) um deren jeweilige Achsen (r1, r2) eine Stange (13) umfasst, bei der ein erstes Ende mit dem feststehenden Körper (15) des ersten Gelenks (11) gelenkig verbunden ist (24) und ein zweites Ende mit dem beweglichen Körper (18) des zweiten Gelenks (12) gelenkig verbunden ist (23), und zwar an einer von der zweiten Drehachse (r2) entfernt angeordneten Stelle, wobei eine Drehung des beweglichen Körpers (18) relativ zum beweglichen Arm (17) um die zweite Achse (r2) herum in eine solche Richtung, dass die Tür (1) zum Hochgehen/ Absinken neigt, den beweglichen Arm (17) dazu bringt, sich relativ zum feststehenden Körper (15) um die erste Achse (r1) herum zu drehen, wodurch die Tür (1) seitlich zur Außenseite/Innenseite des Fahrzeugs verschoben wird.

3. Mechanismus gemäß Anspruch 2, **dadurch gekennzeichnet, dass** der feststehende Körper (15) des ersten Gelenks (11) einen zylindrischen Abschnitt (15b) aufweist, der zur ersten Drehachse (r1) koaxial ist, um mit einem entsprechenden ersten zylindrischen Abschnitt (17a) des beweglichen Arms (17) in Eingriff zu kommen, um eine Drehung um die erste Achse (r1) herum zu ermöglichen; und dass der bewegliche Arm (17) einen zweiten zylindrischen Abschnitt (17b) aufweist, der im ersten Abschnitt (17a) integriert und zur zweiten Drehachse (r2) koaxial ist, um mit einem entsprechenden zylindrischen Abschnitt (18a) des beweglichen Körpers (18) in Eingriff zu kommen, um eine Drehung um die zweite Achse (r2) herum zu ermöglichen.

4. Mechanismus gemäß Anspruch 2 oder 3, **dadurch gekennzeichnet, dass** er weiters eine Gasfeder (14) umfasst, die an einem Ende mit dem Fahrzeugrahmen und am gegenüberliegenden Ende mit dem beweglichen Körper (18) des zweiten Gelenks (12) an einer von der zweiten Drehachse (r2) entfernt angeordneten Stelle gelenkig verbunden ist, wobei die Gasfeder (14) während der Öffnungsbewegung der Tür (1) ein Drehmoment auf den beweglichen Körper (18) ausübt, und zwar um die zweite Drehachse (r2) herum, die zum Anheben der Tür (1) neigt.

5. Mechanismus gemäß Anspruch 4, **dadurch gekennzeichnet, dass** der bewegliche Körper (18) weiters Folgendes umfasst:
einen Fortsatz (20) zum Schaffen jeweiliger Gelenkverbindungspunkte für die Stange (13) und die Gasfeder (14), wobei der Fortsatz (20) als ein Stück mit dem zylindrischen Abschnitt (18a) des zweiten Gelenks (12) drehbar ist; und
Mittel zum Verändern der relativen Winkelposition zwischen dem Fortsatz (20) und dem zylindrischen Abschnitt (18a), wodurch eine Anpassung der Drehbewegungen der beiden Gelenke (11, 12) um ihre jeweiligen Drehachsen (r1, r2) ermöglicht wird.

6. Mechanismus gemäß Anspruch 5, **dadurch gekennzeichnet, dass** die Mittel zum Verändern der relativen Winkelposition zwischen dem Fortsatz (20) und dem zylindrischen Abschnitt (18a) des zweiten Gelenks (12) eine Zahnverbindung umfassen.

7. Kraftfahrzeug-Seitentür (1), **dadurch gekennzeichnet, dass** sie mit einem Mechanismus (10) gemäß einem der vorhergehenden Ansprüche ausgestattet ist.

8. Kraftfahrzeug mit mindestens einer Seitentür (1), **dadurch gekennzeichnet, dass** es einen Mechanismus (10) gemäß einem der Ansprüche 1 bis 6 zum Öffnen und Schließen der mindestens einen Seitentür (1) umfasst.

## Revendications

1. Mécanisme pour ouvrir et fermer une porte papillon latérale (1) d'un véhicule à moteur, du type comprenant une première articulation (11) définissant un premier axe de rotation (r1) fixe par rapport à la structure du véhicule,
une seconde articulation (12) définissant un second axe de rotation (r2) qui ne repose pas dans le même plan que le premier axe (r1) ni ne coupe celui-ci par la suite, dans lequel le second axe (r2) est agencé pour tourner autour du premier axe (r1) de la première articulation (11), **caractérisé en ce qu'**il comprend aussi une tige de liaison (13) intercalée entre les deux articulations (11, 12) pour combiner les mouvements de rotation autour de leurs axes respectifs (r1, r2) de façon à fournir un mécanisme articulé agencé pour provoquer le mouvement d'ouverture/fermeture de la porte (1) en soulevant/abaissant une partie arrière de la porte (1) et, dans le même temps, en décalant latéralement la porte (1) vers l'extérieur/l'intérieur du véhicule.

2. Mécanisme selon la revendication 1, du type dans lequel la première articulation (11) comprend un corps fixe (15) connecté à la structure de véhicule et un bras mobile (17) monté sur le corps fixe (15) pour rotation autour du premier axe (r1), et la seconde articulation (12) comprend un corps mobile (18), sur lequel la porte (1) est fixée et qui est agencé pour tourner par rapport au bras mobile (17) autour du second axe de rotation (r2) ; **caractérisé en ce que** ladite tige de liaison (13) pour combiner les mouvements de rotation des deux articulations (11, 12) autour de leurs axes respectifs (r1, r2) comprend une tige (13) ayant une première extrémité articulée (24) sur le corps fixe (15) de la première articulation (11) et une seconde extrémité articulée (23) sur le corps mobile (18) de la seconde articulation (12) en un point espacé du second axe de rotation (r2), moyennant quoi la rotation du corps mobile (18) par rapport au bras mobile (17) autour du second axe (r2), dans une direction telle que la porte (1) tend à se soulever/s'abaisser, fait tourner le bras mobile (17) par rapport au corps fixe (15) autour du premier axe (r1), décalant ainsi latéralement la porte (1) vers l'extérieur/l'intérieur du véhicule.

3. Mécanisme selon la revendication 2, **caractérisé en ce que** le corps fixe (15) de la première articulation (11) a une partie cylindrique (15b) coaxiale avec le premier axe de rotation (r1), pour faire venir en prise une première partie cylindrique (17a) correspondante du bras mobile (17) pour permettre la rotation autour du premier axe (r1); et **en ce que** le bras mobile (17) a une seconde partie cylindrique (17b) d'un seul bloc avec la première partie (17a) et coaxiale avec le second axe de rotation (r2), pour faire venir en prise une partie cylindrique (18a) correspondante du corps mobile (18) pour permettre la rotation autour du second axe (r2).

4. Mécanisme selon la revendication 2 ou 3, **caractérisé en ce qu'**il comprend en outre un vérin à gaz (14) articulé en une extrémité à la structure de véhicule et en l'extrémité opposée au corps mobile (18) de la seconde articulation (12) en un point espacé du second axe de rotation (r2), moyennant quoi pendant le mouvement d'ouverture de la porte (1) le vérin à gaz (14) exerce un couple sur le corps mobile (18) autour du second axe de rotation (r2) qui tend à soulever la porte (1).

5. Mécanisme selon la revendication 4, **caractérisé en ce que** le corps mobile (18) comprend en outre
une extension (20) pour fournir des points respectifs d'articulation pour la tige (13) et le vérin à gaz (14), l'extension (20) pouvant tourner comme une seule pièce avec la partie cylindrique (18a) de la seconde articulation (12) ; et
des moyens pour faire varier la position angulaire relative entre l'extension (20) et la partie cylindrique (18a), permettant ainsi d'ajuster les mouvements de rotation des deux articulation (11, 12) autour de leurs axes de rotation respectifs (r1, r2).

6. Mécanisme selon la revendication 5, **caractérisé en ce que** lesdits moyens pour faire varier la position angulaire relative entre l'extension (20) et la partie cylindrique (18a) de la seconde articulation (12) comprennent un joint denté.

7. Porte papillon latérale de véhicule à moteur (1), **caractérisé en ce qu'**elle est pourvue d'un mécanisme (10) selon l'une quelconque des revendications précédentes.

8. Véhicule à moteur ayant au moins une porte latérale (1), **caractérisé en ce qu'**il comprend un mécanisme (10) selon l'une quelconque des revendications 1 à 6 pour ouvrir et fermer l'au moins une porte latérale (1).
